# EUROPÄISCHE PATENTSCHRIFT

(11) **EP 4 103 352 B1**
(45) Veröffentlichungstag und Bekanntmachung des Hinweises auf die Patenterteilung: **09.10.2024**
(21) Anmeldenummer: 21704533.5
(22) Anmeldetag: 10.02.2021
(51) Int. Cl.: B23Q 3/06

(54) **STÜTZEINRICHTUNG FÜR EINE LASERBEARBEITUNGSMASCHINE SOWIE LASERBEARBEITUNGSMASCHINE**
SUPPORTING DEVICE FOR A LASER MACHINING MACHINE, AND LASER MACHINING MACHINE
DISPOSITIF DE SUPPORT POUR UNE MACHINE D'USINAGE AU LASER ET MACHINE D'USINAGE AU LASER

(30) Priorität: 11.02.2020 DE 102020103484
(43) Veröffentlichungstag der Anmeldung: 21.12.2022
(73) Patentinhaber: TRUMPF Werkzeugmaschinen SE + Co. KG, 71254 Ditzingen (DE)
(72) Erfinder: HAUG, Thomas, 72519 Veringenstadt (DE)
(74) Vertreter: Trumpf Patentabteilung
(86) Internationale Anmeldenummer: PCT/EP2021/053221
(87) Internationale Veröffentlichungsnummer: WO 2021/160678

(56) Entgegenhaltungen:
- EP-A1- 3 292 944
- CN-U- 209 598 600
- DE-A1- 102010 027 927
- JP-A- 2010 201 465
- JP-A- S 617 095
- US-A1- 2012 279 949

## Beschreibung

Die Erfindung betrifft eine Stützeinrichtung zur Unterstützung eines Werkstückes zur Bearbeitung in einer Laserbearbeitungsmaschine sowie eine Laserbearbeitungsmaschine zum Bearbeiten von rohrförmigen Werkstücken.

Aus der JP 2010-201465 A ist eine Laserbearbeitungsmaschine zur Bearbeitung von rohrförmigen Werkstücken bekannt. Diese Laserbearbeitungsmaschine umfasst eine Handhabungseinrichtung zur Handhabung der rohrförmigen Werkstücke bei der Bearbeitung des rohrförmigen Werkstücks in einem Bearbeitungsbereich. Innerhalb des Bearbeitungsbereichs ist ein Laserkopf bewegbar. Die Handhabungseinrichtung umfasst ein drehbares Spannfutter sowie mindestens eine Stützeinrichtung zur Unterstützung des rohrförmigen Werkstücks bei der Bearbeitung. Diese Stützeinrichtungen sind in dem Bearbeitungsbereich längsverschieblich aufgenommen. Zur Unterstützung des rohrförmigen Werkstücks umfasst die Stützeinrichtung an einem Basisträger zwei Führungselemente. Diese Führungselemente sind unabhängig voneinander auf die Größe des zu bearbeitenden rohrförmigen Werkstücks einstellbar. Der Einstellvorgang ist aufgrund von Klemmschrauben zur Veränderung der Position der Führungselemente zum Basisträger aufwändig.

Aus der JP 2005-152947 ist des Weiteren eine Bearbeitungsmaschine zur Bearbeitung von rohrförmigen Werkstücken bekannt. Die Handhabungseinrichtung umfasst ein drehbares Spannfutter sowie eine Stützeinrichtung. Diese Stützeinrichtung besteht aus zwei Führungshebeln mit am jeweiligen Ende angeordneten Aufnahmeteilen. Diese Führungshebel sind scherenartig zueinander angeordnet und durch eine Gewindespindel mit einem zentralen Handrad im Abstand zueinander einstellbar. Diese Anordnung benötigt einen großen Bauraum. Zudem besteht durch die Drehbewegung an einem zentralen Handrad kein linearer Zusammenhang mit einer Änderung des eingestellten Rohrdurchmessers, so dass der Einstellvorgang erschwert ist.

Der Erfindung liegt die Aufgabe zugrunde, eine Stützeinrichtung für eine Laserbearbeitungsmaschine sowie eine Laserbearbeitungsmaschine vorzuschlagen, durch welche eine einfache und prozesssichere Handhabung der Stützeinrichtung für die Bearbeitung eines rohr- oder profilförmigen Werkstücks ermöglicht ist.

Diese Aufgabe wird durch eine Stützeinrichtung gelöst, bei welcher eine Führungseinrichtung zwei zu einem Basisträger verschiebbare Schlitten aufweist und an jedem Schlitten zumindest ein Führungselement vorgesehen ist und die Schlitten der Führungseinrichtung, insbesondere gekoppelt,entlang von zwei in einem Winkel zueinander angeordneten Führungen relativ zum Basisträger verfahrbar sind. Durch die zwei in einem Winkel zueinander angeordneten Führungen wird ermöglicht, dass die an den Schlitten angeordneten Führungselemente unter Beibehaltung jeweils beidseitig gleicher Abstände zur Mittenachse des zu stützenden rohr- oder profilförmigen Werkstücks relativ zueinander auf unterschiedliche Querschnitte der Werkstücke einstellbar ist. Darüber hinaus wird durch Anordnung der Führungen in einem Winkel zueinander eine Verfahrbewegung der Schlitten mit einem geringen Bauraum ermöglicht. Zudem wird eine exakte, wiederholgenaue Einstellung des Abstands der Führungselemente abhängig von dem zur Bearbeitung kommenden Querschnitt des rohr- oder profilförmigen Werkstückes ermöglicht.

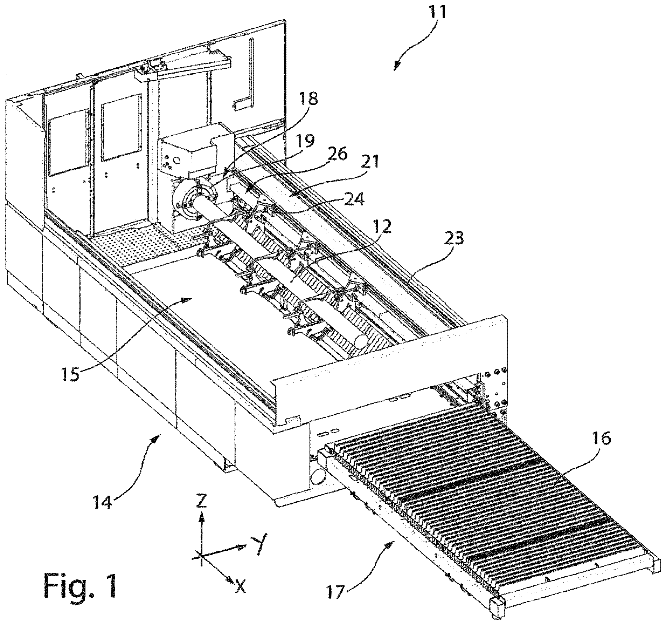

Bevorzugt ist vorgesehen, dass die Führungen der Führungseinrichtung in einem Winkel von 90° zueinander ausgerichtet sind und in einem Winkel von 45° zu einer Vertikalen an dem Basisträger angeordnet sind. Die Vertikale entspricht der Z-Richtung eines der Laserbearbeitungsmaschine zugeordneten Koordinatensystems, welches beispielsweise in Figur 1 dargestellt ist. Dadurch kann in einfacher und präziser Weise eine Einstellung des Abstandes der Führungselemente durch die Schlitten erfolgen.

Des Weiteren ist an jedem Schlitten getrennt zur Führung eine Laufschiene vorgesehen, die in einer Horizontalen ausgerichtet ist. Außerdem ist der Laufschiene zugeordnet an dem jeweiligen gegenüberliegenden Schlitten eine Laufrolle vorgesehen, die sich an der Laufschiene des anderen Schlittens abstützt. Die Horizontale entspricht der Y-Richtung eines der Lasermaschine zugeordneten Koordinatensystems, welches beispielsweise in Figur 1 dargestellt ist. Durch diese Laufschiene an dem einen Schlitten und der Laufrolle an dem anderen Schlitten, die sich auf der benachbarten Laufschiene abstützt, wird eine verbesserte Abstützkraft ermöglicht. Zudem können während der Aufnahme des Werkstücks wirkende Hebelkräfte auf die im Winkel von 45° zur Vertikalen angeordneten Führungen reduziert werden.

Gemäß einer bevorzugten Ausführungsform ist vorgesehen, dass die beiden Schlitten gemeinsam durch einen Antrieb im Abstand zueinander verfahrbar und einstellbar sind. Dadurch kann eine synchrone Verfahrbewegung der beiden Schlitten relativ zueinander angesteuert werden. Somit ist der Abstand der einander gegenüberliegenden Führungselemente zu einer Vertikalen betragsmäßig jeweils gleich, so dass eine exakte Ausrichtung der Längsachse des Werkstücks zur Rotationsachse eines Spannfutters durch die Stützeinrichtungen ermöglicht ist, welche das Werkstück aufnehmen. Die Ausrichtung der beiden Führungselemente zur Vertikalen erfolgt derart, dass die Vertikale die Längsachse bzw. Rotationsachse der Werkstücke kreuzt.

Eine vorteilhafte Ausgestaltung des Antriebs sieht vor, dass mit einer Gewindespindel beide Schlitten angetrieben werden. Bevorzugt umfasst die Gewindespindel einen rechtsgängigen und einen linksgängigen Gewindeabschnitt, so dass eine gleichzeitige Verfahrbewegung ansteuerbar ist. Alternativ kann vorgesehen sein, dass der Antrieb zwei Gewindespindeln umfasst, wobei jeweils eine Gewindespindel an einem Schlitten angreift und durch den Antrieb die Drehbewegung der beiden Gewindespindeln synchronisiert wird. Die eine oder beide Gewindespindeln können manuell bewegt werden. Alternativ kann der Antrieb ist elektromotorisch angesteuert sein.

Eine vorteilhafte Ausgestaltung des Antriebs sieht vor, dass dieser eine Erfassungseinrichtung aufweist, durch welche der Abstand der Schlitten und damit der Durchmesser des rohr- oder profilförmigen Werkstücks erfassbar ist. Dadurch kann ein Signal an eine Anzeigeeinrichtung, wie beispielsweise an ein Display ausgegeben werden. Das Bedienpersonal kann so bei der Einstellung der Stützeinrichtung auf das zu bearbeitende rohrförmige Werkstück unterstützt werden. Auch kann vorgesehen sein, dass dieses Signal der Erfassungseinrichtung an eine Maschinensteuerung der Laserbearbeitungsmaschine weitergeleitet wird. Dadurch kann eine automatische Ansteuerung und Einstellung der Stützeinrichtung auf das zu bearbeitende rohrförmige Werkstück ermöglicht sein.

An dem jeweiligen Schlitten der Führungseinrichtung sind die Führungselemente bevorzugt in einer Position zwischen 40° und 50°, insbesondere von 45°, zu einer Vertikalen ausgerichtet. Dadurch wird eine optimale Abstützung zur Aufnahme des rohrförmigen Werkstücks ermöglicht.

Die Führungselemente sind bevorzugt als Kugelrollen ausgebildet. Dadurch wird eine vereinfachte Verschiebebewegung und Drehbewegung des Werkstücks in der Stützeinrichtung ermöglicht.

Gemäß einer weiteren bevorzugten Ausführungsform der Stützeinrichtung ist vorgesehen, dass an dem Basisträger gegenüberliegend zur Führungseinrichtung Aufnahmeelemente für eine Führungsscheibe vorgesehen sind. Eine solche Führungsscheibe weist eine Durchbrechung auf, durch welche Rohre oder Profile mit einem Querschnitt geführt sind, die von einem runden Querschnitt abweichen. Durch den Einsatz von solchen Führungsscheiben kann mit der Stützeinrichtung eine erhöhte Flexibilität in der Bearbeitung von Werkstücken mit nicht-runden Querschnitten ermöglicht sein.

Die an dem Basisträger vorgesehenen Aufnahmeelemente umfassen zumindest Laufrollen, auf welchen die Führungsscheibe mit dem darin geführten Werkstück um die Längsachse des Werkstücks drehbar gestützt ist.

Des Weiteren ist bevorzugt vorgesehen, dass die Auflageelemente zumindest zwei U-förmige Halteelemente umfassen, durch welche die Führungsscheibe drehbar geführt ist. Diese U-förmigen Halteelemente sind bevorzugt einander gegenüberliegend und mit Abstand zu den Laufrollen angeordnet, so dass die Führungsscheibe in einfacher Weise von oben eingesetzt und rotierend zum Basisträger positioniert werden kann.

Die Stützeinrichtung weist vorteilhafterweise einen Bügel mit zumindest einem Niederhalteelement auf, welcher an dem Basisträger lösbar befestigt und in der Höhe zu den Führungselementen einstellbar ist. Durch das zumindest eine Niederhalteelement an dem Bügel kann das runde rohrförmige Werkstück oder die Führungsscheibe zum Basisträger niedergehalten werden. Dadurch wird eine präzise Führung der zu bearbeitenden rohr- oder profilförmigen Werkstücke durch die Stützeinrichtung ermöglicht.

Gemäß einer ersten Ausführungsform des Bügels für die Führung von im Querschnitt runden Werkstücken ist zumindest ein Niederhalteelement oberhalb und dem zumindest einen an dem jeweiligen Schlitten angeordneten Führungselement gegenüberliegend ausgerichtet, so dass das Niederhalteelement von oben auf das Werkstück einwirkt. Bevorzugt liegen die Führungselemente und das zumindest eine Niederhalteelement in einer gemeinsamen vertikalen Ebene.

Vorteilhafterweise ist an dem Bügel für runde Werkstücke ein Niederhalteelement vorgesehen, welches zu dem jeweiligen Führungselement an dem Schlitten derart ausgerichtet ist, dass durch das Niederhalteelement und die Führungselemente eine Drei-Punkt-Auflage für das rohrförmige Werkstück gegeben ist. Dadurch kann ein exaktes Führen des rohrförmigen Werkstückes in einfacher Weise erzielt werden.

Eine alternative Ausführungsform des Bügels zum Halten der Führungsscheibe umfasst zumindest ein Niederhalteelement, welches an einem Außenumfang der Führungsscheibe anliegt und die Führungsscheibe rotierbar zum Basisträger positioniert. Dadurch kann die Führungsscheibe rotierbar zu den Laufrollen am Basisträger gehalten werden. Die Laufrollen sind bevorzugt in einem Winkel zwischen 40° und 50° zur Vertikalen ausgerichtet, um eine optimale Abstützung der Führungsscheibe zu ermöglichen.

Die der Erfindung zugrundeliegende Aufgabe wird des Weiteren durch eine Laserbearbeitungsmaschine, insbesondere Laser-Flachbettmaschine, zur wahlweisen Bearbeitung von plattenförmigen oder von rohrförmigen Werkstücken gelöst, welche eine Verschiebeeinrichtung umfasst, an welcher eine Werkstückauflage zur Auflage eines plattenförmigen Werkstücks festlegbar ist und die Werkstückauflage in einem Bearbeitungsbereich der Laserbearbeitungsmaschine und aus diesem heraus bewegt und mit einer Handhabungseinrichtung zur Handhabung des rohrförmigen Werkstücks bei der Bearbeitung des rohrförmigen Werkstücks in dem Bearbeitungsbereich und mit einem innerhalb des Bearbeitungsbereichs bewegbaren Laserbearbeitungskopf, wobei die Handhabungseinrichtung mindestens eine Stützeinrichtung zur Unterstützung des rohrförmigen Werkstücks bei der Bearbeitung nach einem der vorbeschriebenen Ausführungsformen umfasst.

Die Erfindung sowie weitere vorteilhafte Ausführungsformen und Weiterbildungen derselben werden im Folgenden anhand der in den Zeichnungen dargestellten Beispiele näher beschrieben und erläutert.

Es zeigen:
- Figur 1: eine perspektivische Ansicht einer Laserbearbeitungsmaschine,
- Figur 2: eine perspektivisch vergrößerte Ansicht einer Handhabungseinrichtung der Laserbearbeitungsmaschine gemäß Figur 1,
- Figur 3: eine perspektivische Ansicht einer Stützeinrichtung der Handhabungseinrichtung gemäß Figur 2,
- Figur 4: eine schematische Seitenansicht der Stützeinrichtung gemäß Figur 3 mit einer teilweisen Schnittansicht,
- Figur 5: eine schematische Seitenansicht der Stützeinrichtung in einer Zwischenposition zur Aufnahme eines rohrförmigen Werkstücks,
- Figur 6: eine schematische Seitenansicht der Stützeinrichtung gemäß Figur 3 mit einer minimalen Einstellposition zur Aufnahme eines Werkstücks,
- Figur 7: eine perspektivische Ansicht der Stützeinrichtung gemäß Figur 3 zur Bearbeitung von rohrförmigen Werkstücken und Profilen mit nicht-rundem Querschnitt, und
- Figur 8: eine weitere schematische Seitenansicht der Stützeinrichtung gemäß Figur 7.
In Figur 1 ist eine perspektivische Ansicht einer Laserbearbeitungsmaschine 11 dargestellt. Diese beispielhafte Laserbearbeitungsmaschine 11 weist die Form einer Laser-Flachbettmaschine zur wahlweisen Bearbeitung von plattenförmigen oder rohrförmigen Werkstücken oder Profilen auf. Die Laserbearbeitungsmaschine 11 umfasst eine Umhausung 14, in welchem ein Bearbeitungsbereich 15 vorgesehen ist. Innerhalb des Bearbeitungsbereiches 15 ist ein nicht näher dargestellter Laserbearbeitungskopf verfahrbar, um beispielsweise ein auf einer Werkstückauflage 16 aufliegendes plattenförmiges, nicht näher dargestelltes Werkstück zu bearbeiten oder ein durch eine Handhabungseinrichtung 18 aufgenommenes Werkstück 12 zu bearbeiten. Die in Figur 1 dargestellte Laserbearbeitungsmaschine 11 ist für die Bearbeitung eines rohrförmigen oder profilförmigen länglichen Werkstücks 12 vorbereitet. Die Werkstückauflage 16 kann durch eine Verschiebeeinrichtung 17, insbesondere einen fahrbaren Schlitten, aus dem Bearbeitungsbereich 15 herausgeführt und in einen benachbart dazu angeordneten Be- und Entladebereich, vorzugsweise außerhalb des Bearbeitungsbereichs 15, verfahren werden, wie dies in Figur 1 dargestellt ist.

Die Handhabungseinrichtung 18 der Laserbearbeitungsmaschine 11 umfasst ein drehbares Spannfutter 19 sowie ein oder mehrere Stützeinrichtungen 21, die zur Abstützung des rohrförmigen oder profilförmigen Werkstücks 12 bei der Bearbeitung dienen. Das drehbare Spannfutter 19 definiert eine Drehachse, um welche das Werkstück 12 bei der Bearbeitung gedreht werden kann. Diese Drehachse erstreckt sich in X-Richtung. Die Stützeinrichtungen 21 sind dazu ausgerichtet, dass die Mittelachse des rohrförmigen oder profilförmigen Werkstücks 12 mit der Drehachse des Spannfutters 19 übereinstimmt.

In der Umhausung 14 der Laserbearbeitungsmaschine 11 verläuft in X-Richtung eine Führungsschiene 23, an welcher die Stützeinrichtungen 21 verschiebbar angeordnet sind. Eine Stützeinrichtung 21 weist bevorzugt einen Führungskörper 24 auf, welcher an der Führungsschiene 23 verfahrbar angeordnet ist. Parallel zur Führungsschiene 23 erstreckt sich bevorzugt ein Kettenantrieb 26, durch welchen ein oder mehrere Stützeinrichtungen 21 entlang der Führungsschiene 23 verschiebbar sind. Dieser Kettenantrieb 26 kann eine Verfahrbewegung der Stützeinrichtungen 21 in Abhängigkeit der Größe oder der Länge des zu bearbeitenden Werkstücks 12 ansteuern.

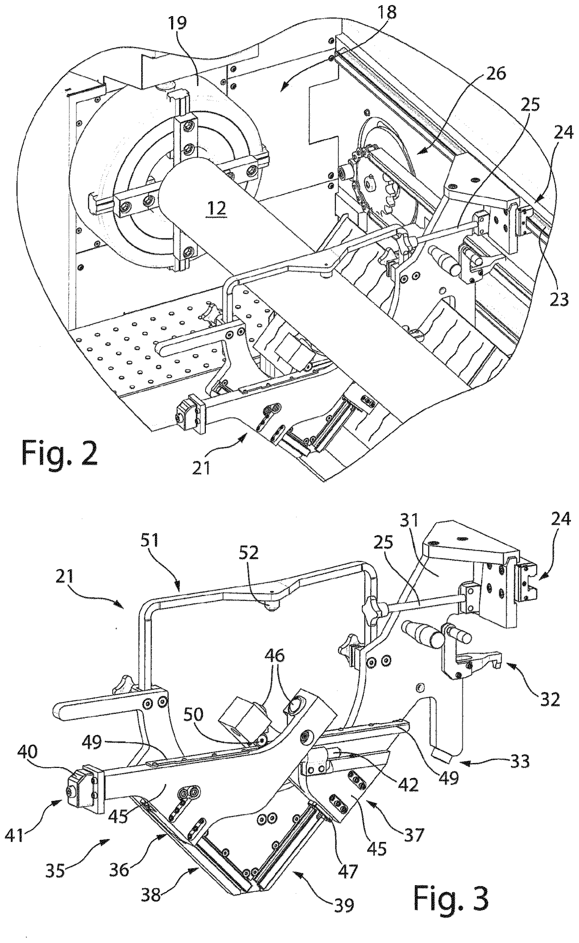

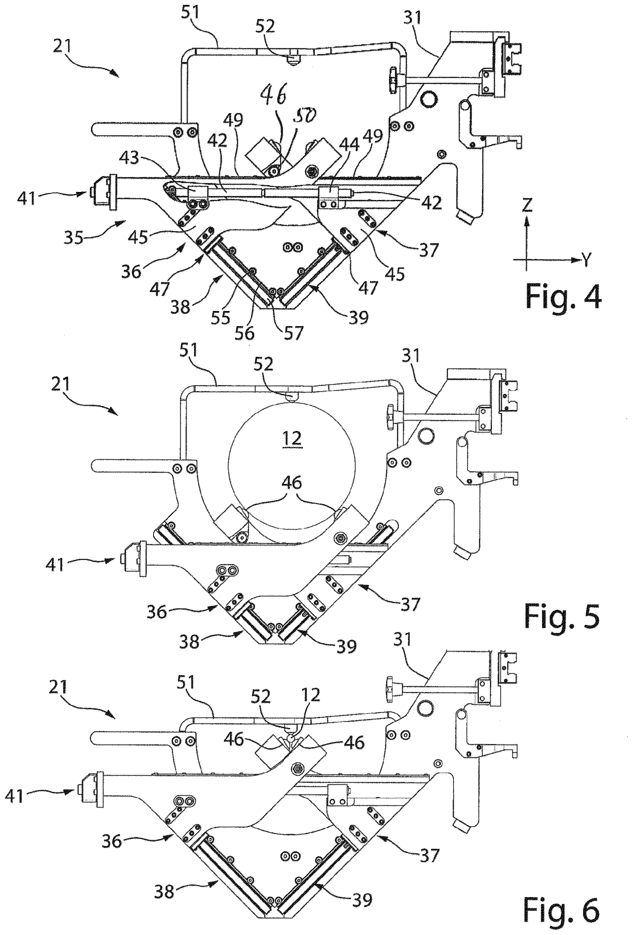

Die Figur 2 zeigt eine perspektivisch vergrößerte Ansicht der Laserbearbeitungsmaschine 11 gemäß Figur 1. Die eine Stützeinrichtung 21 ist beispielhaft nahe zum Spannfutter 19 positioniert, um das durch das Spannfutter 19 eingespannte Werkstück 12 abzustützen. Die in Figur 2 dargestellte Stützeinrichtung 21 ist perspektivisch in Figur 3 und als Seitenansicht in Figur 4 dargestellt.

Die Stützeinrichtung 21 umfasst einen Basisträger 31, der beispielhaft plattenförmig ausgebildet ist. An einem seitlichen Abschnitt des Basisträgers 31 ist der Führungskörper 24 befestigt, durch welchen die Stützeinrichtung 21 entlang der Fahrschiene 23 verschiebbar ist. Benachbart dazu ist an dem Basisträger 31 ein Verschlusselement 32 vorgesehen, durch welches die Stützeinrichtung 21 mit dem Kettenantrieb 26 gekoppelt und daraufhin entlang der Führungsschiene 23 verfahrbar ist. Bevorzugt ist unterhalb des Verschlusselementes 32 und/oder mit Abstand zum Führungskörper 24 ein Abstützelement 33 vorgesehen, das an der Laserbearbeitungsmaschine 11 abgestützt ist und durch welches zusammenwirkend mit dem Führungskörper 24 die Stützeinrichtung 21 frei in den Bearbeitungsbereich 15 ragend gehalten ist. Durch Lösen eines Klemmelements 25, z.B. einer Klemmschraube, und Öffnen des Verschlusselements 32 kann die Stützeinrichtung 21 aus der Laserbearbeitungsmaschine 11 entnommen werden. Der Führungskörper 24 verbleibt hierbei in der Laserbearbeitungsmaschine 11.

An dem Basisträger 31 ist eine Führungseinrichtung 35 zur Führung der rohrförmigen Werkstücke 12 vorgesehen. Die Führungseinrichtung 35 umfasst zwei Schlitten 36, 37, die gegenläufig zueinander verfahrbar sind. Jeder Schlitten 36, 37 ist an einer Führung 38, 39 verfahrbar geführt. Beispielsweise kann es sich um eine Linearführung, eine Gleitführung oder dergleichen handeln. Die Führungen 38, 39 sind bevorzugt in einem Winkel von 90° zueinander ausgerichtet. Des Weiteren ist jede Führung 38, 39 in einem Winkel von 45° zu einer Vertikalen (Z-Richtung) ausgerichtet.

Zur Einstellung eines Abstandes der Schlitten 36, 37 zueinander ist ein Antrieb 41 vorgesehen. Vorteilhaft umfasst der Antrieb 41 eine Anzeigeeinrichtung 40, auf welcher der eingestellte Rohrdurchmesser angezeigt wird, und eine Gewindespindel 42. Die Drehbewegung der Gewindespindel 42 kann von Hand, beispielsweise mit Hilfe eines Innensechskantschlüssels, erzeugt werden. Alternativ kann die Ansteuerung des Antriebs auch elektromotorisch erfolgen. Die Gewindespindel 42 greift an beiden Schlitten 36, 37 gleichzeitig an. An dem Schlitten 36 ist ein erster Gewindeabschnitt 43 vorgesehen, der beispielsweise rechtsgängig ist. An dem weiteren Schlitten 37 ist ein weiterer Gewindeabschnitt 44 vorgesehen, der beispielsweise linksgängig ist. Durch eine Drehbewegung der Gewindespindel 42 kann gleichzeitig eine Verfahrbewegung der beiden Schlitten 36, 37 voneinander weg oder aufeinander zu entlang den Führungen 38, 39 angesteuert werden. An den Schlitten 36, 37 angeordnete Führungselemente 46 können dadurch jeweils im gleichen Abstand zu einer dazwischen verlaufenden Vertikalen 48 angeordnet sein.

Die Führungselemente 46 sind an dem Schlitten 36, 37 derart angeordnet und ausgerichtet, dass diese unter einem Winkel von 40° bis 50° zur Vertikalen 48 ausgerichtet sind. Dadurch kann eine optimale Abstützung hinsichtlich Krafteinwirkung und Genauigkeit bei einem aufliegenden rohrförmigen Werkstück erfolgen. Die Führungselemente 46 sind bevorzugt als Laufkugeln ausgebildet. Diese können auswechselbar an dem Schlitten 36, 37 vorgesehen sein.

Vorteilhaft sind die Führungen 38, 39 zur Aufnahme der durch die Führungselemente 46 erzeugten Kräfte bzw. Momente am Basisträger 31 besonders befestigt. Die Befestigung der Führungen 38, 39 erfolgt durch Spannelemente 55, beispielsweise Senkkopfschrauben, welche die Führungen 38, 39 mit Hilfe einer Welle 56 gegen ein Anschlagelement 57 spannen. Hierbei wird die Spannkraft der Senkkopfschrauben 55, welche mit ihrem Kopf von oben auf die Welle 56 drücken, zur Seite in Richtung auf das Anschlagelement 57 umgeleitet.

Jeder Schlitten 36, 37 umfasst einen Schlittenkörper 45, der an einem Ende das Führungselement 46 aufweist. Dieses Ende des Schlittenkörpers 45 ist schwanenhalsförmig ausgebildet, so dass das Führungselement 46 in einem Winkel von 45° zur Vertikalen 48 ausgerichtet ist. Gegenüberliegend zu diesem Ende nimmt der Schlittenkörper 45 einen Laufwagen 47 auf, der entlang der Führung 38, 39 verfahrbar ist. Die Schlittenkörper 45 der Schlitten 36, 37 sind im Wesentlichen von der Geometrie ähnlich aufgebaut und spiegelbildlich zueinander ausgerichtet, wobei die Spiegelebene die Vertikale ist. Dadurch wird ermöglicht, dass unabhängig von der Einstellung der Führungseinrichtung 35 jedes Führungselement 46 des Schlittens 36 auf einer Seite der Vertikalen ausgerichtet ist und während der Verfahrbewegung auch ausgerichtet bleibt und der Laufwagen 47 des Schlittens 36 auf der gegenüberliegenden Seite der Vertikalen ausgerichtet ist. Unabhängig von der Verfahrbewegung entlang der Führung 38 bleibt diese Anordnung und Ausrichtung des Schlittens 36 zur Vertikalen 48 erhalten. Analoges gilt für den Schlitten 37.

Des Weiteren nimmt jeder Schlittenkörper 45 des Schlittens 36, 37 eine horizontal ausgerichtete bzw. in Y-Richtung ausgerichtete Laufschiene 49 auf, an welcher sich eine Laufrolle 50 des benachbarten Schlittens 36, 37 abstützt. Dadurch kann eine zusätzliche gegenseitige Abstützung der Schlitten 36, 37 während einer Verfahrbewegung entlang der jeweiligen Führung 38, 39 erfolgen. Die jeweiligen Laufschienen 49 an dem Schlitten 36, 37 sind parallel nebeneinander und in der gleichen horizontalen Ebene zueinander ausgerichtet. Diese Laufschienen 49 erstrecken sich rechtwinklig zur Drehachse bzw. Längsachse des Werkstücks 12.

An dem Basisträger 31 ist bevorzugt ein Bügel 51 mit zumindest einem Niederhalteelement 52 befestigbar. Bevorzugt ist der Bügel 51 an Aufnahmen am Basisträger 31 einsteckbar und durch mindestens ein lösbares Befestigungselement 54 zum Basisträger 31 in der Höhe einstellbar und fixiert. Zur Führung von runden Werkstücken 22 und deren Positionierung zu den Führungselementen 46 ist bevorzugt ein Niederhalteelement 52 am Bügel 51 vorgesehen. Dieses liegt insbesondere in der Vertikalen. Dadurch wird für das zu haltende rohrförmige Werkstück eine Drei-Punkt-Auflage gebildet. Vorteilhafterweise ist das Niederhalteelement 52 ebenfalls als Kugelrolle ausgebildet.

In Figur 5 ist eine schematische Seitenansicht der Stützeinrichtung 21 zur Aufnahme eines zu bearbeitenden rohrförmigen Werkstücks 12 mit großem Durchmesser dargestellt. In Figur 6 ist eine schematische Seitenansicht der Stützeinrichtung 21 zur Aufnahme des kleinstmöglichen Durchmessers eines rohrförmigen Werkstücks 12 dargestellt. Durch den Vergleich dieser beiden Positionen der Führungseinrichtung 35 wird offensichtlich, dass ein geringer Bauraum für die Stützeinrichtung 21 erforderlich ist, um rohrförmige Werkstücken 12 mit unterschiedlich großem Durchmesser aufzunehmen. Des Weiteren ist zu ersehen, dass der Bügel 51 in Abhängigkeit des Durchmessers des Werkstücks 12 in der Höhe veränderbar an dem Basisträger 31 befestigt werden kann.

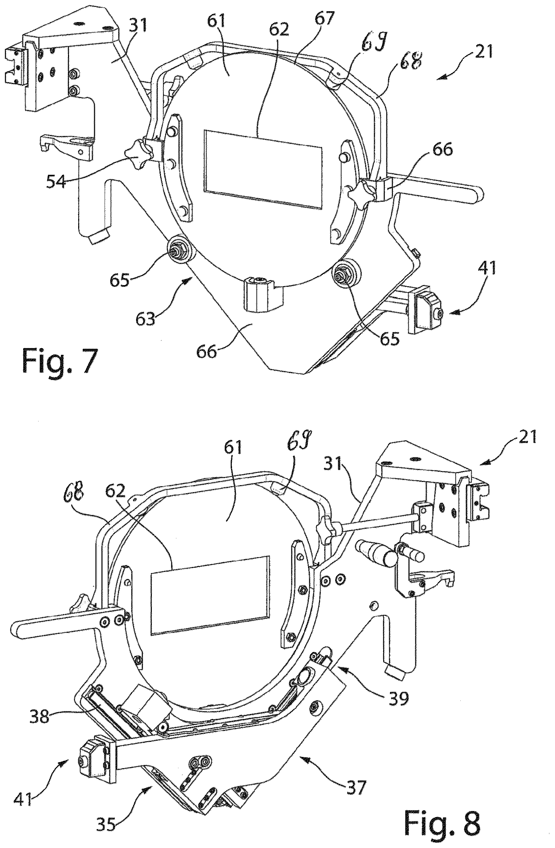

Durch die Anordnung der Führungen 38, 39 sowie der Ausgestaltung des Antriebs 41 wird sichergestellt, dass die Lage der Achse des Werkstücks 12 unabhängig von dessen Größe mit der Drehachse des Spannfutters 19 übereinstimmt.In Figur 7 ist eine erste schematische Seitenansicht der Stützeinrichtung 21 zur Unterstützung von einem profilförmigen Werkstück mit einem Querschnitt dargestellt, das von einem runden Querschnitt abweicht. Die Figur 8 zeigt eine weitere, gegenüberliegende Seitenansicht der Stützeinrichtung 21 gemäß Figur 7. Zur Führung von Rohren oder Profilen mit einem Querschnitt, die von einem runden Querschnitt abweichen, wird eine Führungsscheibe 61 eingesetzt, welche eine Durchbrechung 62 aufweist, die an den Querschnitt des zu bearbeitenden Werkstücks 12 angepasst ist, um dieses Werkstück 12 zu führen. Zur rotierenden Aufnahme dieser Führungsscheibe 61 zum Basisträger 31 sind Aufnahmeelemente 63 vorgesehen. Diese Aufnahmeelemente 63 können beispielsweise als zumindest zwei Laufrollen 65 ausgebildet sein, die an dem Basisträger 31 befestigt sind. Diese Laufrollen 65 sind bevorzugt in einem Winkel zwischen 40° und 50° zur Vertikalen ausgerichtet. Dadurch kann eine optimale Abstützung bei der drehbaren Aufnahme der Führungsscheibe 61 erfolgen. Die Aufnahmeelemente 63 können des Weiteren U-förmige Halteelemente 66 umfassen. Diese können beispielsweise einander gegenüberliegen und bevorzugt horizontal zueinander ausgerichtet an dem Basisträger 31 befestigt sein. Zusätzlich kann auch noch ein weiteres U-förmiges Halteelement 66 an dem Basisträger 31 befestigt sein, welches beispielsweise die Führungsscheibe 61 in der Vertikalen stützt. Dadurch ist die Führungsscheibe 61 in einer vertikalen Ausrichtung frei drehbar zum Basisträger 31 geführt. Während einer Drehbewegung der Führungsscheibe 61 kann diese sich auf den Laufrollen 65 abstützen.

Für eine exakte Führung von Werkstücken 12 mit einem nicht-runden Querschnitt durch eine Führungsscheibe 61 kann zusätzlich der Bügel 68 mit zumindest einem Niederhalteelement 69 an dem Basisträger 31 anordenbar sein. Das zumindest eine Niederhalteelement 69 ist dabei derart an dem Bügel 68 angeordnet, dass das zumindest eine Niederhalteelement 69 an einer außen umlaufenden Lauffläche 67 der Führungsscheibe 61 angreift. Diese Lauffläche 67 der Führungsscheibe 61 stützt sich auch auf den Laufrollen 65 ab. Im Ausführungsbeispiel sind an dem Bügel 68 zwei Niederhalteelemente 69 dargestellt, die analog zu den Laufrollen 65 positioniert sind. Alternativ kann auch nur ein Niederhalteelement 69 am Bügel 68 vorgesehen sein, welches in einer Vertikalen 48 liegt.

Bei der Verwendung der Führungsscheibe 61 der Stützeinrichtung 21 ist die Führungseinrichtung 35 bevorzugt in einer Position angeordnet, so dass die Führungselemente 46 außerhalb eines Drehbereichs der Durchbrechung 62 der Führungsscheibe 61 liegen.

## Patentansprüche

1. Stützeinrichtung (21) zur Unterstützung eines Werkstücks (12) zur Bearbeitung in einer Laserbearbeitungsmaschine (11),
- mit einem Basisträger (31), der einen Führungskörper (24) zum Befestigen der Stützeinrichtung (21) in der Laserbearbeitungsmaschine (11) aufweist,
- mit einer an dem Basisträger (31) vorgesehenen Führungseinrichtung (35) zur Führung des Werkstücks (12), welche wenigstens zwei Führungselemente (46) zur Auflage des Werkstücks (12) umfasst, die im Abstand zueinander einstellbar sind,
- wobei die Führungseinrichtung (35) zwei relativ zum Basisträger (31) verfahrbare Schlitten (36, 37) aufweist und an jedem Schlitten (36, 37) zumindest ein Führungselement (46) vorgesehen ist, und
- wobei die Schlitten (36, 37), insbesondere gekoppelt, entlang von zwei in einem Winkel zueinander angeordneten Führungen (38, 39) verfahrbar sind, die an dem Basisträger (31) vorgesehen sind,
**dadurch gekennzeichnet,**
- **dass** der jeweilige Schlitten (36, 37) eine Laufschiene (49) aufweist, die in einer Horizontalen ausgerichtet ist und der Laufschiene (49) zugeordnet an dem jeweiligen gegenüberliegenden Schlitten (36, 37) eine Laufrolle (50) vorgesehen ist, die sich an der Laufschiene (49) des anderen Schlittens (36, 37) abstützt.

2. Stützeinrichtung nach Anspruch 1, **dadurch gekennzeichnet, dass** die Führungen (38, 39) in einem Winkel von 90° zueinander ausgerichtet und in einem Winkel von 45° zu einer Vertikalen (48) an dem Basisträger (31) angeordnet sind.

3. Stützeinrichtung nach einem der vorhergehenden Ansprüche, **dadurch gekennzeichnet, dass** die beiden Schlitten (36, 37) gemeinsam durch einen Antrieb (41) im Abstand zueinander verfahrbar und einstellbar sind.

4. Stützeinrichtung nach Anspruch 3, **dadurch gekennzeichnet, dass** der Antrieb (41) durch eine Gewindespindel (42) mit einem am Schlitten (36) angeordneten rechtsgängigen Gewindeabschnitt (43) und mit einem am weiteren Schlitten (37) angeordneten linksgängigen Gewindeabschnitt (44) ausgebildet ist.

5. Stützeinrichtung nach einem der Ansprüche 3 oder 4, **dadurch gekennzeichnet, dass** der Antrieb (41) eine Erfassungseinrichtung aufweist, durch welche der Abstand der Schlitten (36, 37) erfassbar ist und die vorzugsweise den Durchmesser des Werkstücks (12) als ein erfasstes Signal an eine Anzeigeeinrichtung (40) und/oder an eine Maschinensteuerung der Laserbearbeitungsmaschine (11) ausgibt.

6. Stützeinrichtung nach einem der vorhergehenden Ansprüche, **dadurch gekennzeichnet, dass** das zumindest eine Führungselement (46) an dem jeweiligen Schlitten (36, 37) in einer Position zwischen 40° und 50° zur Vertikalen (48) ausgerichtet ist und vorzugsweise im Querschnitt runde Werkstücke stützt.

7. Stützeinrichtung nach einem der vorhergehenden Ansprüche, **dadurch gekennzeichnet, dass** die Führungselemente (46) als Kugelrollen ausgebildet sind.

8. Stützeinrichtung nach einem der vorhergehenden Ansprüche, **dadurch gekennzeichnet, dass** an dem Basisträger (31) der Führungseinrichtung (35) gegenüberliegend Aufnahmeelemente (63) für eine Führungsscheibe (61) mit einer Durchbrechung (62) vorgesehen sind, durch welche rohr- oder profilförmige Werkstücke (12) mit einem Querschnitt geführt sind, die von einem runden Querschnitt abweichen.

9. Stützeinrichtung nach Anspruch 8, **dadurch gekennzeichnet, dass** die Aufnahmeelemente (63) zumindest als eine Kugel- oder Laufrolle (65) ausgebildet sind, durch welche die Führungsscheibe (61) mit dem darin geführten Werkstück (12) um die Längsachse des Werkstücks (12) drehbar gelagert ist.

10. Stützeinrichtung nach Anspruch 8, **dadurch gekennzeichnet, dass** die Auflageelemente (63) zumindest als U-förmige Halteelemente (66) ausgebildet sind, durch welche die Führungsscheibe (61) drehbar zum Basisträger (31) gehalten ist.

11. Stützeinrichtung nach einem der vorhergehenden Ansprüche, **dadurch gekennzeichnet, dass** an dem Basisträger (31) ein Bügel (51) mit zumindest einem Niederhalteelement (52) lösbar befestigt ist, durch welchen das Werkstück (12) oder die Führungsscheibe (61) zum Basisträger (31) gehalten ist.

12. Stützeinrichtung nach Anspruch 11, **dadurch gekennzeichnet, dass** an dem Bügel (51, 68) für im Querschnitt runde Werkstücke (12) zumindest ein Niederhalteelement (52, 69) angeordnet und den Führungselementen (46) gegenüberliegend ausgerichtet ist und an dem Werkstück (12) angreift.

13. Stützeinrichtung nach Anspruch 11, **dadurch gekennzeichnet, dass** der Bügel (51, 68) für die Führungsscheibe (61) zumindest ein Niederhalteelement (52, 69) aufweist, welches an einer als Lauffläche (67) ausgebildeten Außenumfangsfläche der Führungsscheibe (61) anliegt und die Führungsscheibe (61) rotierbar zum Basisträger (31) positioniert.

14. Laserbearbeitungsmaschine (11), insbesondere Laser-Flachbettmaschine, zur wahlweisen Bearbeitung von plattenförmigen oder von rohrförmigen Werkstücken (12),
- mit einer Verschiebeeinrichtung (17), an welcher eine Werkstückauflage (16) zur Auflage des plattenförmigen Werkstücks (12) befestigbar ist, um die Werkstückauflage (16) in einen Bearbeitungsbereich (15) der Laserbearbeitungsmaschine (11) und aus diesem heraus zu bewegen,
- mit einer Handhabungseinrichtung (18) zur Handhabung des rohrförmigen Werkstücks (12) zur Bearbeitung des rohrförmigen Werkstücks (12) in dem Bearbeitungsbereich (15), die mindestens eine Stützeinrichtung (21) zur Unterstützung des rohrförmigen Werkstücks (12) für die Bearbeitung aufweist, sowie
- mit einem innerhalb des Bearbeitungsbereichs (15) bewegbaren Laserbearbeitungskopf,
**dadurch gekennzeichnet, dass**
- die Stützeinrichtung (21) nach einem der Ansprüche 1 bis 13 ausgebildet ist.

## Claims

1. A support apparatus (21) for supporting a workpiece (12) to be processed in a laser processing machine (11), comprising
- a base support (31) having a guide body (24) for fastening the support apparatus (21) in the laser processing machine (11),
- a guide apparatus (35) provided on the base support (31) for guiding the workpiece (12), the guide apparatus comprising at least two guide elements (46) on which the workpiece (12) rests, the distance of the guide elements from one another being adjustable,
- wherein the guide apparatus (35) comprises two sleds (36, 37) which are displaceable relative to the base support (31), and at least one guide element (46) is provided at each sled (36, 37), and
- wherein the sleds (36, 37) are displaceable, in particular in coupled fashion, along two guides (38, 39) arranged at an angle relative to one another, the guides being provided on the base support (31),
**characterized in that**
- each sled (36, 37) has a guide rail (49) oriented horizontally, and a guide roller (50) associated with the guide rail (49) is provided on each opposite sled (36, 37) respectively, the respective guide roller being supported on the guide rail (49) of the other sled (36, 37).

2. The support apparatus according to claim 1, **characterized in that** the guides (38, 39) are oriented at an angle of 90° relative to one another and are arranged at an angle of 45° relative to a vertical (48) on the base support (31).

3. The support apparatus according to one of the preceding claims, **characterized in that** the two sleds (36, 37) are mutually displaceable and adjustable with respect to their distance from one another using a drive (41).

4. The support apparatus according to claim 3, **characterized in that** the drive (41) is made up of a threaded spindle (42) with a right-handed thread section (43) arranged on the sled (36) and a left-handed thread section (44) arranged on the other sled (37).

5. The support apparatus according to one of claims 3 or 4, **characterized in that** the drive (41) comprises a sensing apparatus for sensing the distance between the sleds (36, 37), the sensing apparatus outputting preferably the diameter of the workpiece (12) as a sensed signal to a display apparatus (40) and/or to a machine controller of the laser processing machine (11).

6. The support apparatus according to one of the preceding claims, **characterized in that** the at least one guide element (46) is oriented in a position of between 40° and 50° relative to the vertical (48) on each sled (36, 37), respectively, and supports workpieces that are preferably round in cross-section.

7. The support apparatus according to one of the preceding claims, **characterized in that** the guide elements (46) are designed as ball rollers.

8. The support apparatus according to one of the preceding claims, **characterized in that** receiving elements (63) for a guide disc (61) that has an opening (62) are provided on the base support (31) opposite to the guide apparatus (35), tubular or profiled workpieces (12) having a cross-section deviating from a round cross-section being passed through said opening.

9. The support apparatus according to claim 8, **characterized in that** the receiving elements (63) are designed at least as a ball or guide roller (65) through which the guide disc (61) and the workpiece (12) guided therein are mounted rotatably about the longitudinal axis of the workpiece (12).

10. The support apparatus according to claim 8, **characterized in that** the support elements (63) are designed as least as U-shaped holding elements (66) by which the guide disc (61) is held rotatably relative to the base support (31).

11. The support apparatus according to one of the preceding claims, **characterized in that** a bracket (51) is fixed releasably on the base support (31), the bracket having at least one hold-down element (52) for holding the workpiece (12) or the guide disc (61) to the base support (31).

12. The support apparatus according to claim 11, **characterized in that** at least one hold-down element (52, 69) for workpieces (12) with a round cross-section is arranged on the bracket (51, 68), the hold-down element being oriented opposite to the guide elements (46) and engaging the workpiece (12).

13. The support apparatus according to claim 11, **characterized in that** the bracket (51, 68) for the guide disc (61) comprises at least one hold-down element (52, 69) that sits against an outer peripheral surface of the guide disc (61), said peripheral surface being designed as running surface (67), and that positions the guide disc (61) rotatably relative to the base support (31).

14. A laser processing machine (11), in particular a laser flat-bed machine, for selectively processing flat or tubular workpieces (12), the machine comprising
- a displacement apparatus (17) to which a workpiece support (16) for supporting the flat workpiece (12) can be fixed so as to move the workpiece support (16) into and out of a processing region (15) of the laser processing machine (11),
- a handling apparatus (18) for handling the tubular workpiece (12) so as to process the tubular workpiece (12) in the processing region (15), the handling apparatus comprising at least one support apparatus (21) for supporting the tubular workpiece (12) for the processing, and
- a laser processing head which is movable within the processing region (15), **characterized in that**
- the support apparatus (21) is designed according to one of claims 1 to 13.

## Revendications

1. Dispositif de support (21) pour supporter une pièce (12) à usiner dans une machine d'usinage laser (11),
- avec un support de base (31) qui comporte un corps de guidage (24) pour fixer le dispositif de support (21) dans la machine d'usinage laser (11),
- avec un dispositif de guidage (35) pourvu sur le support de base (31) pour guider la pièce (12), comportant au moins deux éléments de guidage (46) pour supporter la pièce (12) qui peuvent être réglés à une distance l'un par rapport à l'autre,
- dans lequel le dispositif de guidage (35) comporte deux chariots (36, 37) déplaçables par rapport au support de base (31) et au moins un élément de guidage (46) est pourvu sur chaque chariot (36, 37), et
- dans lequel les chariots (36, 37), en particulier lorsqu'ils sont couplés, peuvent être déplacés le long de deux guides (38, 39) agencés selon un angle l'un par rapport à l'autre et pourvus sur le support de base (31),
**caractérisé en ce que**
- le chariot (36, 37) respectif comporte un rail (49) qui est orienté horizontalement, et un galet (50) associé au rail (49) est pourvu sur le chariot (36, 37) opposé respectif et est supporté sur le rail (49) de l'autre chariot (36, 37).

2. Dispositif de support selon la revendication 1, **caractérisé en ce que** les guides (38, 39) sont alignés l'un par rapport à l'autre selon un angle de 90° et sont agencés selon un angle de 45° par rapport à une verticale (48) au support de base (31).

3. Dispositif de support selon l'une des revendications précédentes, **caractérisé en ce que** les deux chariots (36, 37) peuvent être déplacés conjointement au moyen d'un entraînement (41) de manière à régler leur distance respective.

4. Dispositif de support selon la revendication 3, **caractérisé en ce que** l'entraînement (41) est constitué par une broche filetée (42) ayant une section filetée à pas droit (43) agencé sur le chariot (36) et une section filetée à pas gauche (44) agencée sur l'autre chariot (37).

5. Dispositif de support selon l'une des revendications 3 et 4, **caractérisé en ce que** l'entraînement (41) comporte un dispositif de détection grâce auquel la distance entre les chariots (36, 37) peut être détectée et qui affiche de préférence le diamètre de la pièce (12) en tant que signal détecté sur un dispositif d'affichage (40) et/ou sur une commande de machine de la machine d'usinage laser (11).

6. Dispositif de support selon l'une des revendications précédentes, **caractérisé en ce que** ledit au moins un élément de guidage (46) est aligné sur le chariot (36, 37) respectif dans une position comprise entre 40° et 50° par rapport à la verticale (48) et supporte de préférence des pièces de section ronde.

7. Dispositif de support selon l'une des revendications précédentes, **caractérisé en ce que** les éléments de guidage (46) sont réalisés sous forme de galets à bille.

8. Dispositif de support selon l'une des revendications précédentes, **caractérisé en ce que** des éléments de réception (63) opposés au dispositif de guidage (35) sont pourvus sur le support de base (31) pour un disque de guidage (61) comportant une ouverture (62) à travers laquelle des pièces (12) tubulaires ou profilées sont guidées dont la section transversale diffère d'une section transversale ronde.

9. Dispositif de support selon la revendication 8, **caractérisé en ce que** les éléments de réception (63) sont conçus au moins sous forme d'un galet à bille ou à rouleau (65), au moyen duquel le disque de guidage (61) avec la pièce (12) qui y est guidée est supporté de manière rotative autour de l'axe longitudinal de la pièce (12).

10. Dispositif de support selon la revendication 8, **caractérisé en ce que** les éléments de support (63) sont conformés au moins comme des éléments de maintien en forme de U (66), à travers lesquels le disque de guidage (61) est supporté de manière rotative par rapport au support de base (31).

11. Dispositif de support selon l'une des revendications précédentes, **caractérisé en ce qu'**un étrier (51) avec au moins un élément de retenue vers le bas (52) est fixé de manière amovible au support de base (31), au moyen duquel la pièce (12) ou le disque de guidage (61) est maintenu sur le support de base (31).

12. Dispositif de support selon la revendication 11, **caractérisé en ce qu'**au moins un élément de retenue vers le bas (52, 69) est agencé sur l'étrier (51, 68) pour des pièces (12) à section ronde, est orienté en face des éléments de guidage (46) et saisit la pièce (12).

13. Dispositif de support selon la revendication 11, **caractérisé en ce que** l'étrier (51, 68) pour le disque de guidage (61) comporte au moins un élément de retenue vers le bas (52, 69) qui repose sur une surface périphérique extérieure du disque de guidage (61) conçu comme surface de palier (67), et le disque de guidage (61) est positionné de manière rotative sur le support de base (31).

14. Machine d'usinage laser (11), en particulier machine laser à plat, pour l'usinage sélectif de pièces (12) en forme de plaque ou tubulaires,
- avec un dispositif de déplacement (17), sur lequel un support de pièce (16) destiné à supporter la pièce (12) en forme de plaque peut être fixé pour déplacer le support de pièce (16) dans et hors d'une zone d'usinage (15) de la machine d'usinage laser (11),
- avec un dispositif de manipulation (18) pour manipuler la pièce (12) tubulaire afin d'usiner la pièce (12) tubulaire dans la zone d'usinage (15), qui comporte au moins un dispositif de support (21) pour supporter la pièce (12) tubulaire pour son usinage, et
- avec une tête d'usinage laser déplaçable dans la zone d'usinage (15),
**caractérisée en ce que**
- le dispositif de support (21) est constitué selon l'une des revendications 1 à 13.
